# EUROPEAN PATENT APPLICATION

(11) **EP 1 847 396 A1**
(43) Date of publication of application: **24.10.2007**
(21) Application number: 07106575.9
(22) Date of filing: 20.04.2007
(51) Int. Cl.: B41J 3/28, B41J 3/46, B41J 11/00, H04N 1/387

(54) **System and method for use in ordering and/or producing a made-to-order corrugated product**

(30) Priority: 20.04.2006 US 409552
(71) Applicant: Kabushiki Kaisha Isowa, Kita-ku Nagoya-shi, Aichi-ken (JP)
(72) Inventor: Isowa, Hideyuki c/o Kabushiki Kaisha Isowa, Kasugai-shi, Aichi (JP)
(74) Representative: Santarelli

(57) **Abstract**

A system and method for use in ordering and producing a made-to-order box is disclosed. The system includes a server computer having a data base of box attributes and a data base of images, at least one image having a blank area therein. Graphical images of a user selected box type are transmitted to the user over a network, and the user identifies and inserts an insert image in the blank area. Ordering information is sent to the producer over a network and the server computer converts the ordering information and the selected images into a format for transmission to an ink jet printer. The ink jet printer is used to print the customer-selected images on sheets of cardboard, which then may be finished and slotted so as to be formed into a box.

## Description

### TECHNICAL FIELD

This application relates to a system and method for use in ordering and/or producing made-to-order corrugated products, and more specifically to a product with a desired image incorporated into the printed image.

### BACKGROUND OF THE INVENTION

Corrugated cardboard sheets or similar paper products to be formed into packaging or shipping boxes may be printed by ink jet technology, as disclosed in applicant's related European patent applications EP 1 731 318 and EP 1 733 890. Presently, two different technologies may be used for ink jet printing. One technology uses a thermal type print head in which a bubble is formed inside nozzles of the print head and the ink droplets are ejected toward the surface to be printed, and a second technology uses a piezoelectric type print head in which ink droplets are produced in response to vibrations of ink orifices.

Where ink jet technology is used for printing a surface, such as a liner surface of a corrugated cardboard sheet used to form a box, the sheet width 20 may be wide, for example about 1500mm. The ink jet printer for such a width may have a plurality of ink jet print heads, each ink jet print head having a plurality of ink jet nozzles oriented in a linear fashion. Such ink jet heads may have a several rows of nozzles, each associated with a specific color, such as the ink colors yellow (Y), magenta (M), cyan (C), and black (K) as are used in printing.

The ink jet print heads are disposed in a widthwise or transverse direction so as to span the entire width or transverse dimension of the surface to be printed. Each of the ink jet print heads may be controlled by one or more process controllers or computers so as to eject ink droplets to produce a desired image. The ink jet heads are fixed in position and the surface to be printed is advanced at a predetermined feed or feeding rate so that the ink droplets can impinge on the surface and form dots and thus create the desired image.

The image data to be printed by the ink jet printer is provided to the printer controller in digital format. Thus, multiple images may be transmitted for printing on various portions of the sheet corresponding to the faces of the box. The selected image data may be rapidly replaced by new image data. Box printing may be adapted to customer requirements by changing the image data supplied to the process controller.

Japanese unexamined patent publication 2002-123715 discloses employing ink jet printing for small lots where it is possible for a customer to transmit electronic data corresponding to a drawing for use in printing on a cardboard sheet. Such an arrangement does not admit of coordination between the customer's drawing and the production of a made-to-order box from a printed cardboard sheet.

Japanese unexamined patent publication 2001-301362 discloses the printing of a personalised calendar where the customer can provide a photograph or illustration to be printed with an ink jet printer in a dedicated zone of the calendar. Such a method does not admit of coordination between the customer's photograph or illustration and the production of the calendar, let alone a made-to-order box.

### SUMMARY OF THE INVENTION

According to one aspect of the invention there is provided a system for producing a made-to-order box, having a server computer configured to access a first, or box attribute, data base of available box characteristics, and a second, or image, data base of images, at least one of the images in the second data base having a blank area therein. The server computer has a communications interface for receiving customer specified box characteristics and images, at least one image may be obtained from the second data base and modified by a customer so that the blank area may be filled with image or text data supplied by the customer.

According to another aspect of the invention there is provided a system for ordering a made-to-order box, having a computer configured to request information through a communications interface, the requested information defining at least available box characteristics, to request image data by transmission over a network, and to display image data received through the communications interface. At least one of the displayed images may have a blank area therein. The customer may have an available data storage device with image insert data stored thereon, and the computer may be configured to select and insert image data obtained from the data storage device in the blank area of the displayed image to create a composite image.

According to yet another aspect of the invention there is provided a method of producing a made-to-order box, the method including providing a first, or box attribute, data base of box attribute data and developed box outline images corresponding thereto; providing a second, or image, data base of image data, at least one image having a blank area therein; and supplying the box attribute data to a customer over through a communications interface. The method further includes receiving the customer-selected box attributes through the communications interface; supplying the customer with a developed box outline image corresponding to the customer-selected box attributes; and receiving a composite image over the communications interface, where the composite image is selected from one or more of at least one image having a blank area, the blank area having been filled with customer-supplied image data.

According to yet another aspect of the invention there is provided a method of use in ordering a made-to-order box, the method including: requesting box attribute data and developed box outline images corresponding thereto; requesting image data, at least one image having a blank area therein; receiving box attribute data and image data over a network through a communications interface; selecting desired box attribute data from the available box attribute data and displaying the corresponding developed box outline image; selecting image data and associating each selected image with a box face as represented on the developed box outline image; selecting image insert data from a data base of customer images and designating the position of the image insert with respect to the blank area in the image to create a composite image; and transmitting the composite image and the box attribute data on a network through a communications interface.

According to still another aspect of the invention there is provided a method of producing a made-to-order box including the steps of: transmitting information defining the types and dimensions of boxes which may be ordered; transmitting image data representing images, including text, which may be printed on the faces of a box, at least one image having a blank area thereon suitable for the insertion of another image including text; receiving a specification indicating the type and dimensions of a box to be produced; receiving image data representing the image having a blank area thereon with an image inserted in the blank area; formatting the image data for transmission to an ink jet printer; and printing images on the sheet.

According to still another aspect of the invention there is provided a method for use in ordering a made-to-order box including the steps of: receiving information defining the types and dimensions of boxes which may be ordered; receiving image data representing images which may be printed on the faces of a box, at least one image having a blank area thereon suitable for the insertion of other image or text data; transmitting a specification indicating the type and dimensions of a box to be produced; transmitting image data representing the image having a blank area thereon with an image inserted in the blank area.

### BRIEF DESCRIPTION OF THE DRAWINGS

Figure 1 shows a block diagram of the system for producing a made-to-order cardboard sheet;
Figure 2 shows the aspects of the production process including the server, the ink jet printer and the finisher;
Figure 3A shows an image of a selected sheet with blank areas in some of the images; Figure 3B shows examples of images that a customer may select for incorporation into the blank areas; Figure 3C is similar to Figure 3A once the customer inserted images have been inserted in the blank areas; and Figure 3D shows a complete assembled box; and
Figure 4 shows a flow diagram of the process for ordering and producing the printed sheet.

### DETAILED DESCRIPTION OF EXEMPLARY EMBODIMENTS

Exemplary embodiments may be better understood with reference to the drawings, but these embodiments are not intended to be of a limiting nature. Like numbered elements in the same or different drawings perform equivalent functions.

A system and method for ordering and/or producing a made-to-order corrugated product suitable for forming into a box for packaging or shipping of an enclosed product is described herein. A variety of sizes and shapes of boxes which may be produced by a manufacturer are defined and stored in a product data base. Similarly a variety of images which may be printed on the surface of such a box are defined and stored in an image data base. Each of the box and image data bases may be accessed by a user, either locally or by way of a communications network such as a local area network (LAN), a wide area network (WAN) such as the Internet, or by wireless means. The user, who may be a customer of the manufacturer of the corrugated product, may be capable of and authorized to insert one or more user supplied images in blank spaces provided in the images pre-defined by the manufacturer.

In the present description, the entity specifying the made-to-order configuration of a box to be produced is the user or the customer, and the entity providing the product or box attribute data base, the image data base, and producing the made-to-order printed sheet suitable for forming into a box is the manufacturer or producer of the corrugated product. The made-to-order printed sheet may be used by a producer to package a product to be shipped to the customer or be shipped to a third entity for forming into a box for the same or similar purpose.

Instructions for implementing the manufacturing processes of the box producer, the processes or operations of a computer, and the like may be provided on computer-readable storage media or memories, such as a cache, buffer, RAM, removable media, hard drive or other computer readable storage media. Computer readable storage media include various types of volatile and nonvolatile storage media. The functions, acts or tasks illustrated in the figures or described herein may be executed in response to one or more sets of instructions stored in or on computer readable storage media. The functions, acts or tasks are independent of the particular type of instruction set, storage media, processor or processing strategy and may be performed by software, hardware, integrated circuits, firmware, micro code and the like, operating alone or in combination. Likewise, data processing strategies may include multiprocessing, multitasking, parallel processing and the like. In an aspect, the instructions may be stored on a removable media device for reading by local or remote systems. In other aspects, the instructions may be stored in a remote location for transfer through a computer network, a local or wide area network or over telephone lines. In yet other aspects, the instructions are stored within a given computer or system. The terms server, computer, processor and the like are used equivalently in the art and that practice is continued herein. To support multiple users at geographically distributed locations, web based applications and devices may be used. Where the term "network" or "Internet" is used, the intent is to describe an Internet-working environment, which may include both local and wide area networks, where defined transmission protocols are used to facilitate communications between diverse, possibly geographically dispersed, entities. An example of such an environment is the World Wide Web and the use of the TCP/IP data packet protocol, and the use of Ethernet or other hardware and software protocols for some of the data paths.

As used herein, the term "corrugated sheet" is intended to mean any structure having at least a liner and a corrugated core or structure, the liner and the corrugated core or structure being integral or co-joined by a fixing means such as an adhesive an interlayer or the like. Such corrugated sheets are commonly made from cellulose-based materials, but as used herein the term is not intended to exclude other materials such as plastics, staple fibers, or other combinations of materials that may be formed into sheets. A corrugated sheet comprises at a minimum a liner and a corrugated core or structure, but may include multiple layers of each type and with various means of joining the layers together.

As used herein the term "sheet" may be a corrugated sheet, a flat sheet or liner, a flat sheet or liner with a corrugated sheet affixed to one surface, a corrugated sheet having flat sheets or liners affixed to opposing surfaces thereof, on combinations of such arrangements. The corrugations may be sinusoidal, crenellated, triangular or the like. The sheet may be cellulose-based, plastic, fibrous or the like and may be a combination of a variety of materials such that a surface suitable for printing is formed.

The term "image" as used herein may include a picture, a drawing, a geometric or abstract design, and/or text in one or more colors, and may even consist of a single solid color. More than one image may be combined for printing on a surface or a face of the box or container. An insert image may have the characteristics of an image as used herein.

In an embodiment of the invention, the manufacturer provides a first, or box attribute, data base comprising product physical characteristics or other attributes, which may include, but are not limited to, overall dimensions of the sheet to be printed, the dimensions of each surface of the box which may be determined by the user, the position of the slots, scores and creases, the specifications of the sheet, including corrugations, the direction of corrugations, bursting strength, inner and outer surface liner and the like. Such characteristics or attributes are available for the user to select, within any limitations contained in the box attribute data base definition provided by the corrugated product manufacturer.

Corresponding to the box dimensions, a developed box outline drawing may be stored or computed showing the relative dimensions, the positions of the scores, creases and slots, and designating portions of the outline drawing with identifiers so that images or other data may subsequently be associated therewith. Other outline drawings may also be prepared, such as perspective views, and views of individual faces of the box. These may facilitate user interaction. In addition to an outer surface developed box outline drawing, an inner surface box outline drawing, or a portion thereof may be prepared, so that an inner surface of the box, such as the inner surface of the cover or top lid may be printed. Further, the user may select a surface of the corrugated sheet for printing a desired image on, for example, a gift box. In this case, ink jet printing is effective, since ink jet printing may be used to print an image on the corrugated sheet in a non-contact manner.

A second, or image, data base may contain a variety of images, selectable by the user for printing on a specified portion of the sheet corresponding to a desired surface of the box. It should be understood that when a "side" or "face" of the box is referred to herein, it represents the side or face of the box manufactured and assembled from the sheet. In the manufacturing process, the sheet is printed as a flat object. The sheet is subsequently slotted and creased (scored), or die-cut and may be formed into a box at a later time. Some of the drawings also include a formed box to aid in the explanation of the overall process. This is done without suggesting a requirement for formation of a box at a specific stage of manufacture.

Some of the images in the data base are configured so as to permit the user to customize the appearance of the box. Specifically, some of the images are provided with blank areas of regular or irregular shape within which the user may insert image data supplied by the user, or from another data base provided by the producer. By specifying an image to be printed within the blank area of the image provided by the manufacturer, the user may customize the appearance of the box by altering one or more of the images printed thereon. For example, a box may have a pre-defined image of a doll, selected from the second data base, and the user may provide or specify a digital image of a face of a family member who may be the recipient of the doll to be inserted in a blank area formed in the pre-defined image corresponding to the location of the face. Alternatively, the pre-defined image may have the form of a gift card, and the user may insert text to be printed in a blank area of the gift card. Such an image may be printed on either an interior or an exterior surface of the box. Not all of the images or information to be printed on the box may be customized. Some images may be predetermined and complete, and some images may be determined with respect to a specific product, but at least one of the images to be printed may be customizable by a user.

Where the image data of the second, or image, data base is intended to be transmitted to another location for display or modification, the resolution may be reduced to improve data transmission speed while maintaining appropriate image quality. Alternatively, thumbnails or icons of the images may be prepared and first transmitted to the user to assist the user in selecting more complete image data from the second, or image, data base. The thumbnailsmay suffice for certain operations, such as where the image is not to be modified, and an icon may suffice where only text is to be inserted. Unless specifically stated to the contrary, the term "image data" is intended to mean any one of the following: full image data, a reduced resolution version of the image data, a thumbnail or an icon.

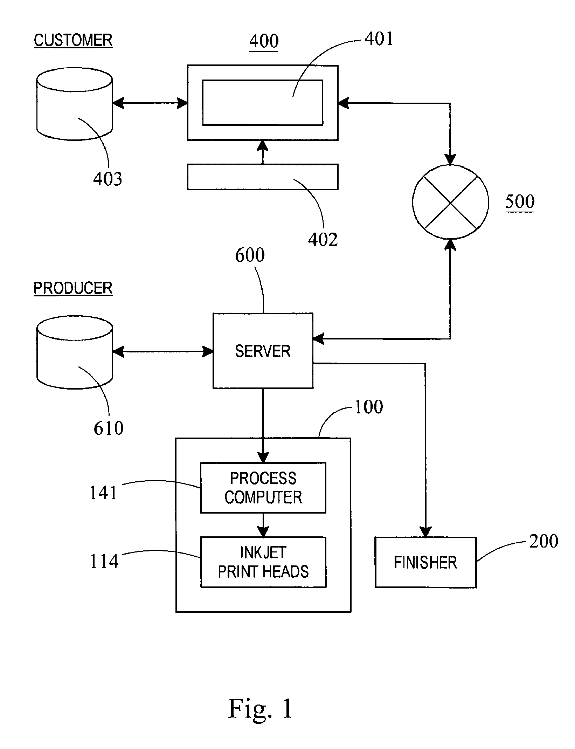

Figure 1 illustrates a portion of the system and method, comprising a customer interface, which may also be termed a client or user interface, having a computer 400, interfacing with a communications network 500, the communications network 500 interfacing with the producer or manufacturer through a server 600. The computer 400, for use by the client may further comprise a display and central processing unit 401, a keyboard 402 and a mass storage medium 403. The computer may be a personal computer, or any equivalent thereof, and have a range of accessories (not shown) including a mouse, auxiliary storage and displays, and the like. The interface between the computer 400 and the network 500 may be a wired or wireless connection. The network may be any of a LAN, an intranet, a WAN such as the Internet, or a wireless interconnection, or a combination of any or all of the types of communications networks, so as to serve as a data connection between the customer and the producer.

At the producer or manufacturer location, a server or computer 600 has an interface to the network 500 and executes a compatible software protocol to establish and maintain communications with the client or user. A mass storage device 610, which may be any of the known types of memory is connected to the server 600. The server further interfaces with the ink jet printer 100, the ink jet printer having a process computer 141. A finisher 200, which may be comprised of a creaser and a slotter may be connected to the server 600. Alternatively, the server may display or print instructions for operators regarding the operation of the finisher 200, and the steps needed to perform the setup and the operation of the finisher may be performed either manually or automatically.

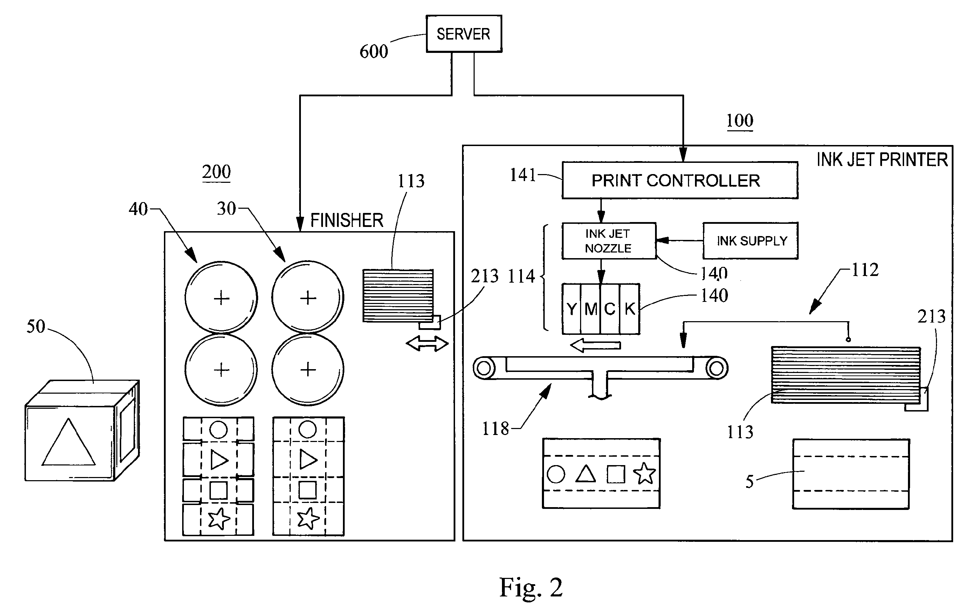

To better describe the system and method, an example of an ink jet printer system is shown in Figure 2. A printer of this type is disclosed in applicant's Japanese Patent Application No. 2005-175369, filed on June 15, 2005 and published under No. ..... The ink jet printer may comprise a print controller 141, a printing head assembly 114, comprising a means for supplying inks of various colors, and a plurality of ink jet nozzles 140, the ink jet nozzles being arranged as previously described to eject ink droplets onto a surface in order to form an image in accordance with commands received from the printer controller 141. Sheets of material 113 to be printed are fed from a feeder 112 by a kicker 213 onto a conveyer belt 118 so as to travel in the direction shown by the arrow, and pass beneath the ink jet print heads 114. The ink droplets ejected by the print head 114 are deposited on the surface of the sheet 5 to form dots thereon. A stacker (not shown) may be disposed at the end of the conveyer belt 118 from the feeder 113 in the printer 100. The printed sheets are stacked by the stacker, and may be immediately finished or finished at a later time. An example of the printed sheet 5 is shown below the conveyer belt unit 118, and the symbols are intended to represent the images printed on four areas, each of the areas corresponding to a face of the finished box 50.

The finisher 200 may comprise a creaser 30 and a slotter 40. The creaser 30 is representative of a device that performs a creasing or a scoring operation, the difference between creasing and scoring being that creasing is transverse to the longer dimension of the sheet 5 and scoring is longitudinal to the longer dimension of the sheet 5. A feeder 113 feeds the printed sheets one by one into the creaser 30 and the slotter 40, and the sheet is then deposited on a stacker (not shown) prior to further processing. At this stage, the printed sheet 5 may be made into a box 50, be stored for future use, or be shipped to another entity for use.

The images printed on the sheet 5 by the ink jet printer 100 represent the images transmitted to the print controller 141 by the server 600. As such, each of the sheets 5 that are fed one by one under the print head 114 by the conveyer belt 118 may be printed with different images, resulting in a made-to-order sheet for use in a box 50. The number of sheets 5 printed with the same pattern of images may be specified in the customer order.

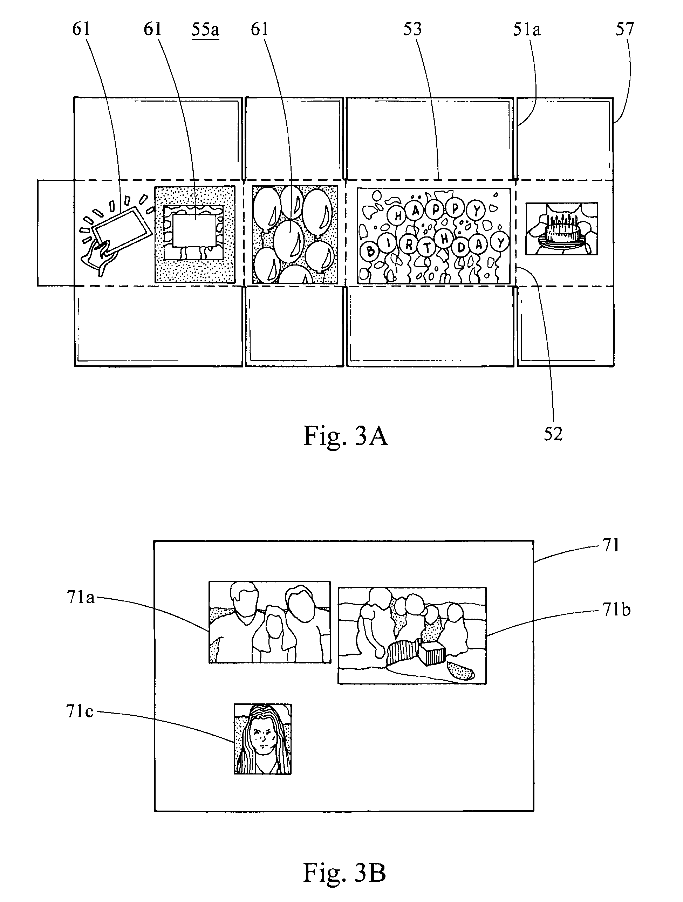

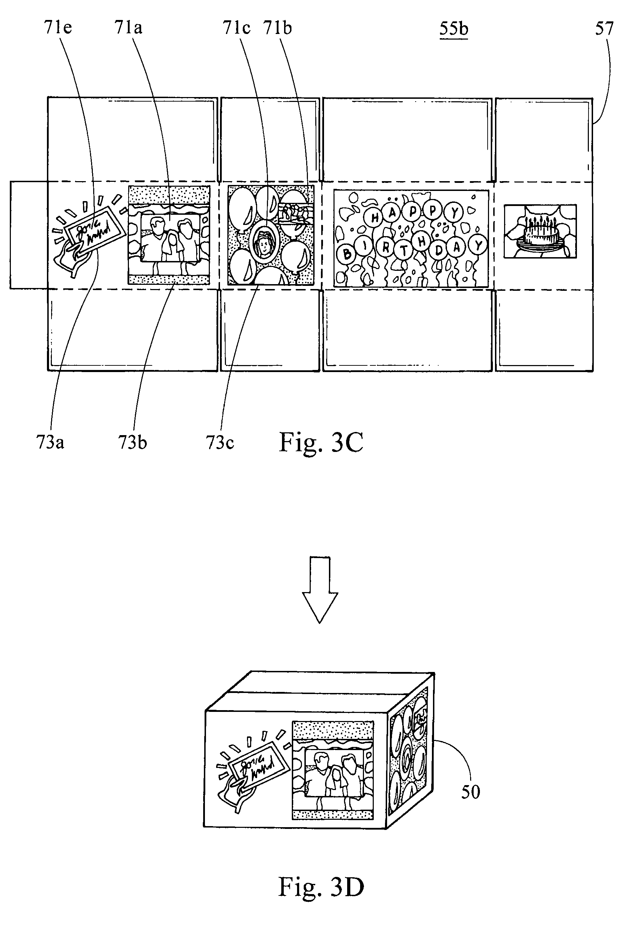

Figures 3A,B,C illustrate images that may be displayed on the client computer display 401 during a phase of the method for ordering the made-to-order printed sheet 5 for the box 50. Figure 3A shows, for example, an image which may be representative of the stage of the ordering process where the customer has selected the size of the box and selected the images from the second, or image, data base to be printed on specific faces of the box 50. In order to specify the dimensions of the sheet 5 for the box 50, data from the first, or box attribute, data base is accessed through the server 600 and rendered as text and/or images on the client computer display 401 so that the client may choose the appropriate dimensions, attributes, materials and the like. Each face of the box 50 may be given an alphanumeric designator to facilitate assignment of image data to a specific location. As shown in Figure 3A, different images selected from the second data base may be displayed on a developed outline image of the box 57. It will be appreciated by persons skilled in the art that the developed outline image of the box is one of a number of graphical depictions of the box that may be displayed on a visual display to facilitate interaction with a customer or user. The term "developed outline image" as used herein should be understood to mean any outline that may schematically show the relationship of any part of the sheet 5 or the resultant box 50 so that selected images may be positioned with respect thereto. These may be views of box faces, perspective views and the like.

It should be understood that the characteristics of a box may be provided from the first, or box attribute, data base to the customer, or the customer may enter numerical dimensions and other characteristics needed to produce the box on an ordering display in a manual or other manner. The range of characteristics for a particular box style that are available from the supplier may be explicitly displayed or checked against limits during the ordering process.

One or more of the selected images has at least one blank area 61 where client specified images (which may be text) may be inserted by the user. Each image may be given a designation, and alphanumeric labels or other indications so as to identify the blank areas 61 suitable for inserting customer specified material. The positions of slots 51, creases 52 and scores 53 in the manufactured printed sheet may also be shown.

Figure 3B shows examples of user specifiable images 71a,b,c, which may be images stored on the local storage device 403 as image data, or text 71 prepared using the keyboard 402 or as text selected from text messages stored on the local storage device 403. A variety of image and digital photographic image processing techniques as are known in the art may be used to, for example, size, crop, rotate, stitch, morph and merge all or a portion of the user provided image data with the image obtained from the second data base of the producer server 600 so as to form a composite image 73. The process of forming a composite image 73 from the image selected from the second, or image, data base and a user selected insert image 71 may be performed for one or more of the blank areas 61 on an image, and may be performed for the image selected for each of the faces of the box 50 for which a customized image 73 is desired. Fig. 3C shows the image modification process where selected user provided insert images 71 have been inserted into blank areas 61 of the images shown in Fig. 3A to produce an image 55b. Fig. 3D is a perspective view of the made-to-order box 50 which results from assembling the printed sheet 5, represented by the image 55b formed into a complete assembled box 50.

When the user has completed the ordering process, the modified images, the sheet specifications, box attributes, the quantity of sheets required, and other administrative data necessary to place the order is sent from the user computer 400 to the server 600 by way of the network 500. The server 600 may perform error checking, confirm the order to the user and convert the order information and image data into a format suitable for transmission to the manufacturing operation.

The setting up of the ink jet printer 100, and the selection and provision of the sheets 5 may be either performed automatically in whole or in part, or the information necessary to perform the equipment set up and materials selection is displayed or printed for use by manufacturing personnel. The image data to be printed on the sheet 5, the quantity of sheets 5 to be printed, and the like, may be sent by the server to the process computer 141 by any electronic means, or the information may be written to removable storage media and physically transported between the server 600 and the process computer associated with the ink jet printer 100.

When the printer 100 has received the image information from the server 600 and the selected type of sheets 5 are loaded in the feeder 113, the ink jet printing process may be performed. In this manner, a printed sheet 5 is produced having the characteristics determined by the user, and may be termed a made-to-order box 50.

Printers may be configured to print information on both sides of the sheet 50 sequentially, so that interior surfaces of the box, such as the inner lid or cover may be printed with image or text. Alternatively, only the side of the sheet 5 corresponding to the exterior or interior, of the box 50 may be printed. The information and images may be fixed or customizable as previously described.

In an embodiment of the invention, the composite printing image 73 including images from the second data base and the customer image may either be printed on the sheet 5 all at the same time, or only the customer image may be printed on the blank areas 61 of the sheet 5 on which the image from the second data base is already printed. The printing steps may also be performed in the reverse order.

Another aspect of a method of producing a made-to-order box includes the steps of: transmitting information defining the types and dimensions of boxes which may be ordered; transmitting image data representing images, including text, which may be printed on the faces of a box, at least one image having a blank area thereon suitable for the insertion of another image including text; receiving a specification indicating the type and dimensions of a box to be produced; receiving image data representing the image having a blank area thereon with an image inserted in the blank area; formatting the image data for transmission to an ink jet printer; and printing images on the sheet.

Another aspect of a method for use in ordering a made-to-order box includes the steps of: receiving information defining the types and dimensions of boxes which may be ordered; receiving image data representing images which may be printed on the faces of a box, at least one image having a blank area thereon suitable for the insertion of other image or text data; transmitting a specification indicating the type and dimensions of a box to be produced; transmitting image data representing the image having a blank area thereon with an image inserted in the blank area.

Each of the methods may include an order verification and confirmation step.

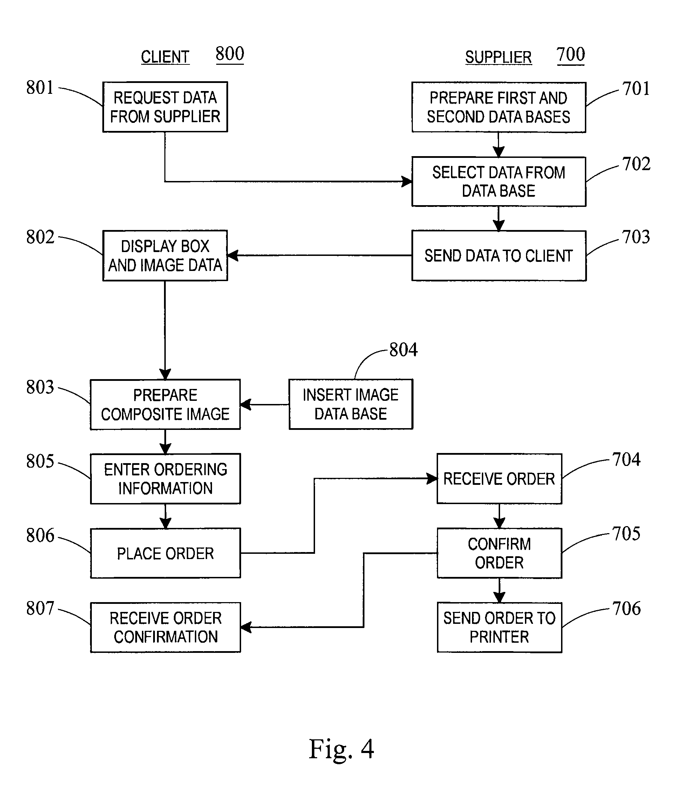

Figure 4 illustrates the method where the aspects related to the customer or client and the producer or supplier are shown having mutual interaction. The producer or supplier may prepare patterns (step 701) representing, for example, developed figures of the box, box size, type and other attributes, so that the customer or client may select from the available styles and characteristics (step 801), the box style and size being represented in the form of a developed outline box image or other representation, and the images being represented by image data, thumbnails, reduced resolution image data, icons or the like, and select the data from the first and second data bases (step 702) and the data sent to the client (step 703). The client may select images from the supplier data base by repeating requests (step 801), and at least one of the images selected has a blank area for the insertion of a client specified image or text. The images selected by the client from the supplier data base are displayed on, for example the developed box outline image on the client computer (step 802). The client may select and insert images including text for the blank areas among the images provided by the supplier and positioned in the developed box outline image to form a composite image (step 803), where the composite image has an inserted image (step 804) effected by the client. The client may enter other ordering information, such as quantity, delivery and the like, then send the completed images, including composite images with the client selected images including text inserted therein to the supplier (step 806). At the supplier location, the received completed images and the attributes selected by the client to specify the box (step 704) are validated, the order may be scheduled, and a confirmation of the order may be sent to the client (step 705) and received by the client (step 807). The order information is processed so as to be usable by the ink jet printer 100. This may include the conversion of red (R), green (G), blue (B) data representations normally used to display images on a visual display such as a computer monitor to the yellow (Y), magenta (M), cyan (C) and black (K) format which may be used for printing. This may further include the adjustment of color balance of the images to take account of the visual and mechanical properties of the liner of the sheet 5 being printed. This image data is sent to the ink jet printer (step 706).

The subsequent steps of the manufacturing process may be performed automatically, manually, or by a combination of automatic and manual steps.

Although only a few exemplary embodiments have been described in detail above, those skilled in the art will readily appreciate that many modifications are possible in the exemplary embodiments without materially departing from the novel teachings and advantages of the invention. Accordingly, all such modifications are intended to be included within the scope of this invention as defined in the following claims.

## Claims

1. A system for producing a made-to-order box, **characterized in that** it comprises a computer configured to access a first data base of available box characteristics, and a second data base of images, at least one of the images in the second data base having a blank area therein, the computer having a communications interface for receiving customer specified box characteristics and images, at least one received image comprising a blank area image from the second data base filled with an image supplied by the customer.

2. A system according to claim 1, **characterized in that** it further comprises an interface to an ink jet printer, the interface being adapted to convert data from a red (R), green (G), blue (B) data format to a yellow (Y), magenta (M), cyan (C), black (K) format.

3. A system according to claim 1 or 2, **characterized in that** the computer is configured to initiate the printing of an ink jet printer.

4. A system according to any one of claims 1 to 3, **characterized in that** the computer is configured to process the customer supplied information as an order, and to provide an order confirmation to the customer through the communications interface.

5. A system according to any one of claims 1 to 4, **characterized in that** the communications interface connects with a network, and data on the network is modulated on a carrier wave.

6. A system according to any one of the preceding claims, **characterized in that** the computer is also configured (i) to request from the customer information defining available box characteristics through the communications interface, (ii) to request image data by transmission over a network and (iii) to display image data received through the communications interface, at least one of the displayed images being the blank area image; **in that** it comprises a data storage device for storing image insert data supplied by the customer; and **in that** the computer is configured to select and insert the image insert data obtained from the data storage device in the blank area of the displayed image to create a composite image.

7. A system according to claim 6, **characterized in that** the computer is configured to transmit image data of the composite image through the communications interface.

8. A method for producing a made-to-order box, the method **characterized in that** it comprises:
providing a first data base of box attribute data and developed box outline images corresponding thereto;
providing a second data base of image data, at least one image having a blank area therein;
supplying the box attribute data to a customer over through a communications interface, and receiving the customer-selected box attributes through the communications interface;
supplying the customer with a developed box outline image corresponding to the customer-selected box attributes; and
receiving a composite image over the communications interface, where the composite image is selected from one or more of at least one image having a blank area, the blank area having been filled with customer-supplied image data.

9. A method according to claim 10, **characterized in that** it further comprises converting the image data from a red (R), green (G), blue (B) data format to a yellow (Y), magenta (M), cyan (C), black (K) format and supplying converted image data to an ink jet printer.

10. A method according to claim 8 or 9, **characterized in that** it further comprises formatting the information received from the customer as an order, validating the order, scheduling the production of the order, and providing an acknowledgement of the order to the customer by transmitting an acknowledgement message over the network through the communications interface.

11. A method according to any one of claims 8 to 10, **characterized in that** the communications interface communicates with a network.

12. A method according to any one of claims 8 to 11 for use in ordering the made-to-order box, the method **characterized in that** it further comprises:
requesting the box attribute data and developed box outline images corresponding thereto;
requesting the image data, including the at least one image having a blank area therein;
selecting image data and associating each selected image with a box face as represented on the corresponding developed box outline image;
selecting image insert data from a data base of customer images and designating the position of the image insert with respect to the blank area in the image to create the composite image; and
transmitting the composite image and the box attribute data over the network through a communications interface

13. A method according to claim 12, **characterized in that** it further comprises modulating the request and the transmitted composite image data on a carrier wave and transmitting the carrier wave on the network.

14. A method according to claim 12 or 13, **characterized in that** the individual faces of the developed box outline image are displayed as separate images.

15. A method according to claim 12, 13 or 14, **characterized in that** the developed box outline image is displayed as an isometric view of the corresponding box, including the selected image and the composite image.

16. A method according to any one of claims 12 to 15, **characterized in that** a second developed box outline image is displayed and image data is associated with a box face corresponding to the inner surface of the cover of the box.

17. A method according to claim 16, **characterized in that** it further comprises forming a composite image associated with the inner surface of the cover of the box.

18. A method according to any one of claims 12 to 17, **characterized in that** the image supplied by the customer comprises text.

19. A method according to any one of claims 8 to 18, **characterized in that** the made-to-order box is made of corrugated cardboard having a one-sided fluted corrugated surface and the printing is on at least the one-sided fluted surface.
